# FASCICULE DE BREVET EUROPEEN

(11) **EP 3 803 496 B1**
(45) Date de publication et mention de la délivrance du brevet: **31.12.2025**
(21) Numéro de dépôt: 19790586.2
(22) Date de dépôt: 07.06.2019
(51) Int. Cl.: G02B 23/18, A42B 3/04

(54) **INTERFACE DE LIAISON D'UN SUPPORT MOBILE ET D'UN DISPOSITIF OPTIQUE, SYSTÈME ASSOCIÉ**
SCHNITTSTELLE ZUR VERBINDUNG EINES MOBILEN TRÄGERS MIT EINER OPTISCHEN VORRICHTUNG, ZUGEHÖRIGES SYSTEM
INTERFACE FOR CONNECTING A MOBILE SUPPORT AND AN OPTICAL DEVICE, ASSOCIATED SYSTEM

(30) Priorité: 07.06.2018 FR 1854986
(43) Date de publication de la demande: 14.04.2021
(73) Titulaire: Wilco International, 83500 La Seyne sur Mer (FR)
(72) Inventeur: MENEY, Dorian, 83500 LA SEYNE SUR MER (FR); JAMBILLOUX, Cédric, 83500 LA SEYNE SUR MER (FR); RENARD, Marc, 83500 LA SEYNE SUR MER (FR); WILHELM, Jean-Marc, 83500 LA SEYNE SUR MER (FR)
(74) Mandataire: Brun, Philippe Alexandre Georges
(86) Numéro de dépôt international: PCT/FR2019/051387
(87) Numéro de publication internationale: WO 2019/234373

(56) Documents cités:
- US-A- 2 271 952
- US-A1- 2011 145 981
- US-A1- 2015 253 563
- US-B1- 6 811 348

## Description

L'invention concerne le domaine des interfaces de liaison d'un support mobile et d'un dispositif optique. De telles interfaces sont utilisées pour tous types d'usage et, préférentiellement mais non limitativement, en lien avec un support mobile sous la forme d'un casque pour personnel militaire dit « casque de protection terrestre », « casque de protection maritime » ou « casque de protection aéronautique » , et plus particulièrement, pour assurer des fonctions de fixation d'un dispositif optique, afin qu'un utilisateur d'un tel casque puisse sur le terrain exploiter sur demande ledit dispositif optique. Un tel équipement doit être maintenu avec la plus grande stabilité possible pour ne pas gêner l'utilisateur. A titre d'exemple non limitatif, un tel équipement sous la forme de Jumelles de Vision Nocturne (également connues sous l'abréviation « JVN », ou sous la terminologie anglo-saxonne « Night Vision Google - NVG »), fixée sur un casque de protection de tout type, au moyen éventuellement d'un dispositif de support optique de type « shroud » selon une terminologie anglo-saxonne, doit demeurer impérativement établi et stable devant les yeux de l'utilisateur quand bien même celui-ci se déplace ou oriente sa tête dans différentes directions.

Les documents US 2015/253563 A1, US2011145981A1 et US6811348B1 divulguent des interfaces pour lier un support mobile et un dispositif optique.

L'invention ne saurait toutefois être limitée à ce seul exemple de réalisation et pourra être transposée à tout support mobile sous la forme d'un équipement de tête, tel que, non limitativement, un casque militaire, balistique ou non, casque de maintien de l'ordre, casque d'intervention et/ou casque civil, un harnais de tête, un masque facial, ou encore tout autre support mobile agencé pour enceindre une partie du corps d'un sujet, que ce sujet soit un être humain ou animal. Ainsi, au sens de l'invention et dans tout le document, on entend par « support mobile », tout support ou objet agencé pour enceindre une partie du corps d'un sujet, que ce sujet soit un être humain ou animal, ledit support n'interférant pas avec un ou plusieurs déplacements ou mouvements dudit sujet. En outre, l'invention pourra être transposée à tout dispositif optique dont la position relative au support doit être maintenue stable dans le temps.

Dans la suite du document, l'invention sera décrite préférentiellement mais non limitativement pour des Interfaces Casques Terrestres (également connues sous l'abréviation « ICT » et les terminologies anglo-saxonnes « Helmet Mount » et « NVG Mount »), permettant d'associer des Jumelles de Vision Nocturne sur un casque terrestre, également qualifié de « casque de protection », équipé d'un dispositif de support optique de type « shroud » ou équivalent, également nommé « élément empreinte ».

Une Interface Casque Terrestre consiste en un assemblage micro mécanique permettant l'emport de tout type de dispositif optique, tel que par exemple des Jumelles de Vision Nocturne, ledit dispositif optique coopérant ou comprenant généralement ladite interface, une telle interface coopérant avec un casque terrestre au moyen éventuel d'un dispositif de support optique de type « shroud » ou équivalent, également nommé « élément empreinte ».

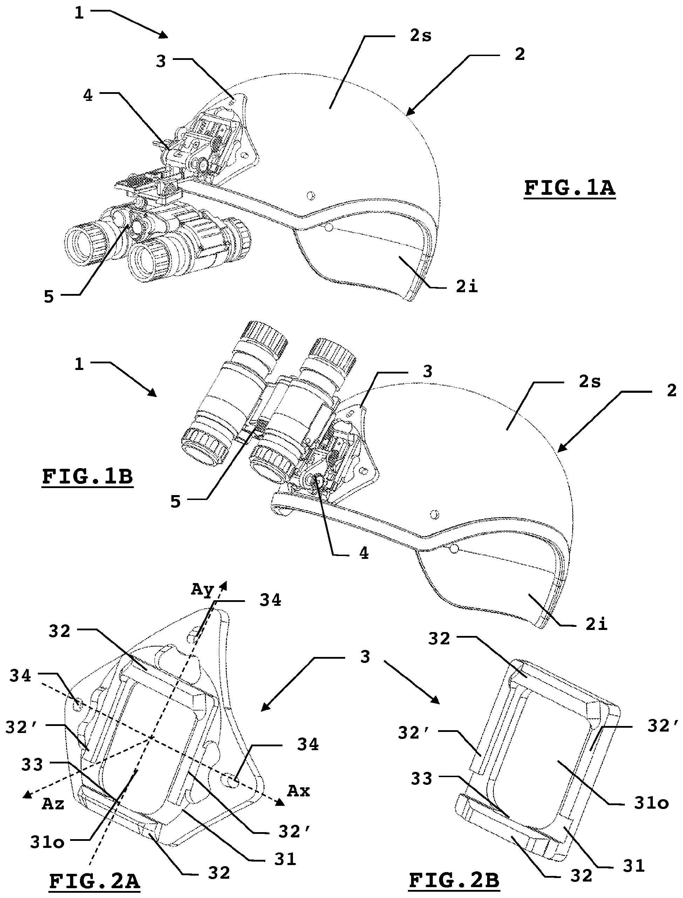

Un exemple de système connu de casque terrestre équipé d'une telle interface ICT et d'un dispositif optique est notamment décrit en lien avec les figures 1A et 1B, ledit système étant illustré respectivement en position de service (« Flip down » selon une terminologie anglo-saxonne) ou mode actif, c'est-à-dire que le dispositif optique est utilisable par un utilisateur, par exemple en vision nocturne, et a contrario en position d'attente (« Flip up » selon une terminologie anglo-saxonne) ou mode passif, selon lequel ledit dispositif optique est escamoté, replié pour ne pas interagir avec le regard dudit utilisateur. Un tel système de casque terrestre permet notamment de positionner et maintenir ledit dispositif optique dans une position adaptée et déterminée, c'est-à-dire face aux yeux d'un utilisateur dudit système, tout en permettant notamment à l'utilisateur de conserver ses mains libres, pour éventuellement tenir un autre accessoire ou équipement, tel que, par exemple, une arme. L'utilisateur peut ainsi employer simultanément le dispositif optique et un autre accessoire ou équipement dont il aurait éventuellement besoin.

Un système 1 comprend avantageusement un casque 2, adapté ou agencé pour être porté, plus particulièrement sur la tête, par un utilisateur. A cet effet, ledit casque 2 présente une surface intérieure 2i adaptée pour être en contact avec la tête de l'utilisateur et une surface extérieure 2s. L'invention ne saurait toutefois être limitée à ce seul exemple de réalisation. En variante, l'invention prévoit que tout autre support 2 ayant pour fonction l'emport d'un dispositif optique tout en maintenant une position déterminée et étant agencée pour être porté par un utilisateur, pourrait être en lieu et place employé. Un système 1 comporte également un dispositif optique sous la forme de jumelles de vision nocturne 5, lesdites jumelles de vision nocturne 5 coopérant avec la surface extérieure 2s du casque 2, équipée d'un élément empreinte ou support optique « shroud » 3, au moyen d'une interface ICT adaptée 4, également et communément qualifiée de « support JVN ».

Selon un exemple de réalisation d'un système connu de casque décrit en lien avec les figures 1A et 1B, pour assurer la solidarisation réversible ou temporaire entre l'interface ICT 4 et le casque terrestre 2 et garantir une stabilisation optimale du dispositif optique, un système connu 1 comporte en outre un élément empreinte 3, également connu sous la dénomination anglo-saxonne « shroud », agencé pour coopérer de manière solidaire et réversible avec l'interface ICT 4. Une telle coopération entre une interface ICT 4 et un élément empreinte 3 peut être matérialisée par une liaison mécanique de type encastrement, préférentiellement réversible. Une telle liaison encastrement peut être réalisée par tous moyens de fixation adaptés, lesdits interface ICT 4 et élément empreinte 3 étant mutuellement agencés, de par leurs structures et leurs formes notamment, pour assurer leur assemblage. Conformément au système décrit en lien avec figures 1A et 1B, un tel élément empreinte 3 coopère solidairement et également avec la surface extérieure 2s dudit casque terrestre, selon une liaison encastrement. Également, une telle liaison encastrement peut être réalisée par tous moyens de fixation adaptés, lesdits casque 2 et élément empreinte 3 étant mutuellement agencés pour assurer leur assemblage. En variante, non représentée sur les figures 2A et 2B à des fins de simplification, pour notamment faciliter l'assemblage dudit système et en limiter les coûts de fabrication, l'élément empreinte 3 peut être directement intégré à la surface extérieure 2s dudit casque terrestre et former, avec ledit casque terrestre, une seule et même entité physique.

Les figures 2A et 2B illustrent schématiquement deux exemples non limitatifs d'éléments empreintes connus. Un élément empreinte 3, de par sa structure, sa forme et ses dimensions, est avantageusement agencé pour accueillir une interface ICT 4 et maintenir cette dernière dans une position stable déterminée. Pour ce faire, un élément empreinte 3 comprend avantageusement un corps 31, ledit corps 31 pouvant être constitué de tout matériau agencé pour être capable d'assurer le maintien en son sein d'une interface 4. Un tel matériau peut, par exemple, consister en l'aluminium, une matière plastique ou tout autre matière polymère adaptée. Toutefois, l'invention ne saurait être limitée au ou auxdits matériaux constituant l'élément empreinte 3. Ledit corps 31 de l'élément empreinte 3 présente avantageusement une forme de cadre de berceau, voire d'anneau, pour accueillir et maintenir dans une position stable déterminée l'interface ICT 4, ledit corps présentant alors un évidement ou une cavité 31o, dont les dimensions et la forme sont mutuellement agencées à celles du socle de l'interface ICT 4. Selon les figures 2A et 2B, un tel corps 31 comporte deux butées verticales 32 et deux butées latérales 32 agencées ou adaptées pour contraindre et/ou contenir les mouvements de l'interface ICT 4 et pour définir ledit cadre. Pour garantir la réduction, voire même la suppression de tout mouvement de l'interface 4 relatif du socle dans la cavité d'accueil de l'élément empreinte, lorsque ladite interface 4 est positionnée au sein de l'élément empreinte 3, le corps 31 de l'élément empreinte 3 comporte une rainure basse 33 et une rainure haute (non représentée au sein des figures), respectivement pratiquées au sein des butées verticales 32, lesdites rainures basse 33 et haute étant agencées pour accueillir respectivement deux parties de l'interface 4 et assurer le maintien de ladite interface par emboîtement. Selon figures 2A et 2B, les éléments empreintes peuvent présenter différentes formes adaptées en fonction des conditions d'application ou de morphologie du support mobile, plus particulièrement du casque terrestre 2, sur lequel l'élément empreinte doit être fixé. Selon un premier exemple de réalisation décrit en lien avec la figure 2A, ledit corps 31 d'un tel élément empreinte 3 peut avantageusement comporter des plages de fixation agencées pour comprendre un ou plusieurs orifices ou trous débouchants 34, de tels orifices étant agencés pour accueillir des moyens de fixation (non représentés sur les figures à des fins de simplification) de l'élément empreinte 3 sur le casque terrestre 2, sous la forme par exemple de vis ou de crochets. En variante, selon un deuxième exemple de réalisation décrit en lien avec la figure 2B, afin de simplifier la fabrication d'un tel élément empreinte 3, ce dernier peut avantageusement présenter une forme sensiblement équivalente à un cadre, ledit élément empreinte 3 pouvant alors être directement fixé sur le casque terrestre 2, voire même intégré audit casque terrestre 2.

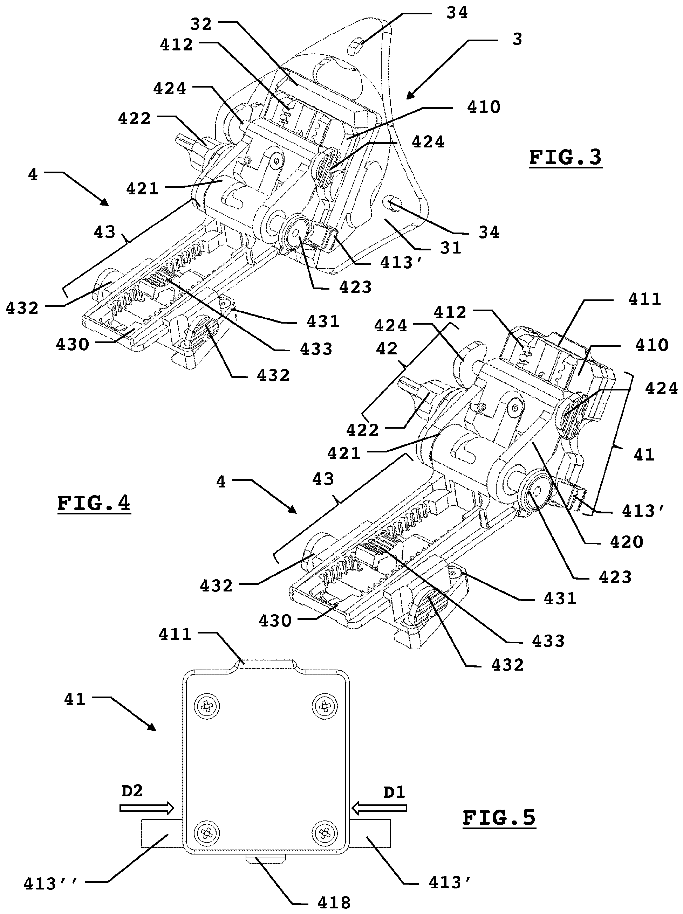

Comme d'ores et déjà mentionné, conformément à l'exemple de réalisation d'un système connu décrit en lien avec les figures 1A et 1B, la fixation d'un dispositif optique, sous la forme par exemple de jumelles de vision nocturne, sur un support mobile tel un casque terrestre 2, est réalisée à l'aide d'une interface ICT 4. Les figures 3 à 5 présentent, quant à elles, différentes vues d'un exemple de réalisation non limitatif d'une interface ICT connue agencée pour coopérer avec un élément empreinte 3 précédemment décrit. Une interface ICT 4, également connue sous les dénominations anglo-saxonnes « Helmet Mount » et « NVG Mount » comporte différents sous-ensembles.

Tout d'abord, ladite interface 4 comporte un premier sous-ensemble arrière comprenant principalement une pièce mécanique socle 41, un tel socle 41 étant agencé, de par sa structure et ses dimensions, pour être inséré et positionné au sein de l'élément empreinte 3 et ainsi maintenir l'interface ICT 4, et en conséquence le dispositif optique 5, dans une position déterminée fixe et/ou stable, malgré les éventuels mouvements de l'utilisateur qui porte le casque terrestre 2 ou plus généralement les mouvements ou trajectoires du support mobile. Pour ce faire, le socle 41 et l'élément empreinte 3 sont mutuellement agencés, de sorte que tout ou partie du socle 41 puisse être intégré au sein de la cavité pratiquée dans l'élément empreinte 3. Par ailleurs, le socle 41 de l'interface ICT 4 comporte une partie sous la forme d'un tenon 411, ledit tenon étant agencé, de par sa structure et ses dimensions, pour être inséré, généralement en premier lors du montage, plus particulièrement de la phase d'encastrement, de l'interface ICT 4, au sein d'une rainure haute (non représentée sur les figures) pratiquée dans la partie supérieure, plus particulièrement la butée verticale supérieure 32 de l'élément empreinte 3 et assurer son maintien par emboitement. Ledit socle 41 comporte en outre des moyens de verrouillage de l'interface ICT 4, comprenant, selon la figure 5, un actionneur monté mobile sous la forme d'un loquet 418. Ledit loquet est avantageusement agencé, de par sa structure et ses dimensions, pour être inséré au sein de la rainure basse 33 de l'élément empreinte 3. L'insertion combinée du tenon 411 et du loquet 418 assure le maintien dans une position déterminée de l'interface ICT 4 au sein de l'élément empreinte 3. Les moyens de verrouillage de l'interface ICT 4 comporte en outre un bouton de verrouillage et/ou déverrouillage monté mobile en translation dont des parties saillantes 413' et 413'' apparaissent en figure 5, qui lorsqu'il est actionné dans une première direction D1, entraîne l'actionnement, c'est-à-dire la montée, de manière permanente, du loquet 418. Pour verrouiller à nouveau la position de l'interface ICT 4 au sein de l'élément empreinte 3, le bouton de verrouillage et/ou déverrouillage doit être actionné dans une deuxième direction D2, de sorte qu'il entraîne alors l'actionnement en sens contraire, c'est-à-dire la descente, du loquet 418 et la sortie concomitante de la partie saillante 413' du bouton de verrouillage/déverrouillage.

Ensuite, ladite interface 4 comporte un deuxième sous-ensemble central 42 comprenant notamment un axe pivot 421 permettant un entrainement en rotation et/ou un basculement du dispositif optique, sous la forme par exemple de jumelles de vision nocturne, 5 d'une position de service horizontale, qualifiée précédemment de « mode actif », à une position d'attente relevée, qualifiée précédemment de « mode passif ». Le deuxième sous-ensemble central 42 comprend en outre un premier bouton actionneur 423, permettant, en appuyant ou actionnant sur ledit premier bouton 423 d'effectuer la mise en position d'attente (également connue sous la dénomination anglo-saxonne « Flip up ») des jumelles ou mode passif, ou encore de la descendre en position de service ou mode actif (également connue sous la dénomination anglo-saxonne « Flip down »). Un tel deuxième sous-ensemble 42 comprend des deuxièmes boutons actionneurs 424, l'appui simultané sur les deuxièmes boutons 424 provoquant le déplacement dudit deuxième sous-ensemble 42 et permettant de régler la hauteur de l'axe optique de l'ensemble interface 4 - dispositif optique au niveau des yeux d'un utilisateur du système. Ledit deuxième sous-ensemble 42 comprend enfin un levier 422, dont l'actionnement entraine une rotation du deuxième sous-ensemble 42 et permet en conséquence de régler l'inclinaison (également connue sous la dénomination anglo-saxonne « Tilt ») du dispositif optique, plus particulièrement des jumelles de vision nocturne 5.

Enfin, l'interface ICT 4 comporte un troisième sous-ensemble avant 43, composé d'un rail 430, d'un chariot 431 coopérant avec ledit rail 430 selon une liaison mécanique de type glissière et d'un levier 433 coopérant solidairement avec ledit chariot 431. Un tel troisième sous-ensemble 43 de l'interface ICT 4 est agencé pour permettre les verrouillage et/ou déverrouillage automatiques des jumelles de vision nocturne 5, par l'actionnement du levier 433. Un troisième sous-ensemble 43 comporte en outre deux boutons actionneurs 432 agencés pour régler le tirage oculaire, également qualifié de « tirage d'anneau », c'est-à-dire la distance séparant la pupille de sortie de la lentille la plus proche d'un des yeux d'un utilisateur, en actionnant simultanément les deux boutons actionneurs 432.

A l'heure actuelle, nombreux sont les industriels qui conçoivent et fabriquent leurs propres éléments empreintes et éventuellement des interfaces ICT adaptées pour être accueillies et maintenues respectivement au sein desdits éléments empreintes. Aussi, dans certains cas, les interfaces ICT sont seulement employables avec uniquement certains éléments empreintes et réciproquement. Par ailleurs, de tels éléments empreintes sont généralement produits à moindres coûts et en grande quantités : il réside alors bien souvent d'importantes disparités mécaniques, également qualifiées de jeux mécaniques, entre les différents éléments empreintes et les socles des interfaces durant leurs assemblages et une fois les socles desdites interfaces fixés sur lesdits éléments empreintes. Certaines différences ou disparités mécaniques peuvent atteindre jusqu'à un millimètre en hauteur et/ou en largeur. Au sens de l'invention et dans tout le document, on entend par « jeu mécanique », un espace défini entre un élément empreinte et un socle de l'interface ICT, lorsque ces derniers sont assemblés. De tels jeux mécaniques sont présents dès le montage de systèmes neufs, de tels systèmes comportant un casque terrestre coopérant avec une interface pour lier un casque terrestre et un dispositif optique, à l'aide d'un élément empreinte. De tels jeux mécaniques proviennent généralement des formes et des divers procédés de fabrication des éléments empreintes par de très nombreux et différents fabricants. Des jeux mécaniques importants existent alors entre l'interface ICT et l'élément empreinte, ne permettant pas d'assurer un maintien suffisant dans une position sensiblement stable et déterminée de l'interface ICT. Dans certains cas, lesdits jeux mécaniques peuvent provoquer un décrochage et une perte des jumelles de vision nocturne ou plus généralement d'un dispositif optique durant l'évolution du personnel en mission. De plus, lesdits jeux mécaniques peuvent également générer des frottements ou des chocs parasites entre différentes pièces du système, plus particulièrement entre l'interface ICT et l'élément empreinte au niveau de la liaison mécanique, ayant pour conséquence d'entraîner une usure prématurée de ces dernières et finalement une amplification desdits jeux mécaniques. A l'heure actuelle, aucune interface ICT ou élément empreinte, de par leur conception, ne permettent de pallier cet inconvénient majeur. Pour lutter contre les jeux mécaniques induits par les disparités de fabrication, ou encore l'usure de l'interface ICT et/ou de l'élément empreinte, chaque utilisateur emploie généralement des techniques « maison », vulgairement appelées « systèmes débrouilles », au risque de mettre en danger une mission ou de détériorer un équipement onéreux.

Comme précisé précédemment, les moyens de verrouillage de l'interface ICT 4 comporte en outre un bouton de verrouillage et/ou déverrouillage monté mobile en translation, comportant des parties saillantes 413' et 413'', les actionnements successifs des parties saillantes 413' et 413'' respectivement dans les directions D1 et D2 entrainant le verrouillage et/ou le déverrouillage de l'interface ICT vis-à-vis de l'élément empreinte. Dans certains cas, la partie saillante 413'' du bouton de verrouillage et/ou déverrouillage peut parfois être actionnée involontairement dans la direction D2, par exemple, en cas de coup latéral exercé sur ledit bouton de verrouillage par une branche, par un obstacle momentané ou encore plus généralement par un simple appui involontaire de l'utilisateur. Une telle action déverrouille alors l'interface ICT et provoque la chute de ladite interface ainsi que celle des jumelles de vision nocturne. Parfois, de tels équipements sont irrémédiablement perdus ou détruits. Un tel déverrouillage involontaire peut parfois avoir des conséquences graves sur une mission allant jusqu'à son abandon en cas de perte des dispositifs optiques.

L'invention permet de répondre à tout ou partie des inconvénients soulevés par les solutions connues.

Parmi les nombreux avantages apportés par une interface de liaison d'un dispositif optique et d'un support mobile, également qualifiée d'interface pour lier un dispositif optique et un support mobile, selon l'invention, nous pouvons mentionner que celui-ci:
- offre une interface permettant de compenser ou supporter divers jeux mécaniques entre une interface ICT et un élément empreinte, ce dernier étant éventuellement monté sur ou directement intégré à un casque terrestre, une telle interface devenant quant à elle adaptable à tout type d'élément empreinte, quelles qu'en soient les tolérances liées au dimensionnement de la cavité destinée à héberger le socle de l'interface ou le procédé de fabrication dudit élément empreinte ;
- propose un système comprenant un support mobile et un dispositif optique dont le maintien demeure assuré dans une position stable déterminée, quand bien même un utilisateur soit particulièrement mobile durant une mission, grâce à des moyens de verrouillage et/ou de déverrouillage améliorés.

Réciproquement, l'invention prévoit un élément empreinte adapté pour lier un support mobile et un dispositif optique, un tel élément empreinte coopérant solidairement avec le socle d'une interface et étant apte à coopérer avec des socles d'interfaces de formes et/ou de dimensions peu rigoureuses.

A cette fin, il est notamment prévu une interface de liaison d'un dispositif optique et d'un support mobile coopérant solidairement avec un élément empreinte, ladite interface comportant un socle agencé pour être inséré au sein de l'élément empreinte, ledit socle consistant en un corps creux. Afin de compenser un ou plusieurs jeux mécaniques prenant place entre une interface et un élément empreinte, éventuellement monté sur ou directement intégré à un support mobile, une telle interface étant adaptable à tout type d'élément empreinte, ledit socle d'une interface conforme à l'invention comporte des moyens compensateurs de jeu(x) mécanique(s) hébergés et montés mobiles au sein du corps creux de sorte à faire saillie et agencés pour prendre appui contre une paroi de l'élément empreinte.

Selon un mode de réalisation d'une interface conforme à l'invention, afin d'optimiser les rattrapages de jeux mécaniques, les moyens compensateurs prennent appui contre une paroi de l'élément empreinte selon deux directions déterminées.

En variante ou en complément, les moyens compensateurs peuvent en outre prendre appui contre une paroi de l'élément empreinte selon trois directions déterminées.

Préférentiellement mais non limitativement, les moyens compensateurs peuvent comprendre des moyens compensateurs verticaux, latéraux et/ou en profondeur, respectivement actionnés par des moyens de réglage.

En variante ou en complément, afin d'éviter tout déverrouillage non intentionnelle de ladite interface et de réduire les risques de chute ou de perte de cette dernière, voire même du dispositif optique, une telle interface peut comporter des moyens de verrouillage et/ou déverrouillage agencés pour requérir deux actions distinctes et simultanées pour assurer leur déclenchement.

Selon un exemple de réalisation préféré mais non limitatif d'une interface conforme à l'invention, les moyens de verrouillage et/ou déverrouillage peuvent comprendre un système d'oscillation à came, deux boutons actionneurs coopérant avec ledit système d'oscillation à came.

Selon un deuxième objet, l'invention concerne un élément empreinte de liaison d'un dispositif optique et d'un support mobile coopérant solidairement avec une interface comprenant un socle, ledit élément empreinte comportant un corps comprenant un cadre définissant une cavité agencée pour accueillir le socle de ladite interface. Afin de compenser un ou plusieurs jeux mécaniques prenant place entre une interface et un élément empreinte, éventuellement monté sur ou directement intégré à un support mobile, un tel élément empreinte étant adaptable à tout type d'interface, ledit cadre comporte des moyens compensateurs de jeu(x) mécanique(s) hébergés et montés mobiles au sein dudit cadre de sorte à faire saillie et agencés pour prendre appui contre une paroi du socle (41) de l'interface.

Préférentiellement mais non limitativement, les moyens compensateurs d'un élément empreinte conforme à l'invention peuvent prendre appui contre une paroi du socle de l'interface selon une première direction déterminée.

Selon un mode de réalisation avantageux mais non limitatif de réalisation, afin d'optimiser les rattrapages de jeux mécaniques, les moyens compensateurs d'un élément empreinte conforme à l'invention peuvent prendre appui contre une paroi du socle de l'interface selon deux directions déterminées.

En variante ou en complément, les moyens compensateurs d'un élément empreinte conforme à l'invention peuvent prendre appui contre une paroi du socle de l'interface selon trois directions déterminées.

Préférentiellement mais non limitativement, les moyens compensateurs d'un élément empreinte conforme à l'invention peuvent comprendre des moyens compensateurs verticaux, latéraux et/ou en profondeur.

Selon un troisième objet, l'invention concerne un système, comprenant un support mobile, un élément empreinte coopérant solidairement avec ledit support mobile, une interface coopérant de manière solidaire et réversible avec ledit élément empreinte, un dispositif optique coopérant de manière solidaire et réversible avec ladite interface. Préférentiellement mais non limitativement, l'interface d'un tel système est conforme au premier objet de l'invention.

D'autres caractéristiques et avantages apparaîtront plus clairement à la lecture de la description qui suit et à l'examen des figures qui l'accompagnent parmi lesquelles :
- les figures 1A et 1B, précédemment décrites, illustrent un exemple de réalisation d'un système connu de casque terrestre équipé d'une interface ICT et d'un dispositif optique, respectivement en modes actif et passif ;
- les figures 2A et 2B, précédemment décrites, illustrent respectivement des premier et deuxième exemples de réalisation d'éléments empreintes connus destinés à être fixés sur un support mobile, en l'espèce un casque terrestre ;
- la figure 3, précédemment décrite, présente un ensemble élément empreinte-interface ICT d'un système connu comprenant notamment un support mobile sous la forme d'un casque terrestre ;
- la figure 4, précédemment décrite, illustre un exemple de réalisation d'une interface comprise au sein d'un système connu comprenant notamment un support mobile sous la forme d'un casque terrestre ;
- la figure 5, précédemment décrite, illustre une vue arrière schématisée des moyens de fixation d'une interface comprise au sein d'un système connu comprenant notamment un support mobile sous la forme d'un casque terrestre ;
- les figures 6A à 6D présentent différentes vues schématiques d'un exemple de réalisation non limitatif d'un socle d'une interface de liaison d'un dispositif optique et d'un support mobile conforme à l'invention ;
- la figure 7 illustre une vue d'un exemple non limitatif de réalisation d'un élément empreinte adapté pour coopérer avec une interface conforme à l'invention ;
- les figures 8A à 8D présentent différentes vues schématiques d'un mode de réalisation non limitatif d'un élément empreinte conforme à l'invention ;
- les figures 9A à 9D présentent différentes vues schématiques d'un exemple de réalisation non limitatif d'un socle d'une interface de liaison d'un dispositif optique et d'un support mobile conforme à l'invention, mettant en exergue le fonctionnement des moyens de verrouillage et/ou de déverrouillage de ladite interface ;
- la figure 10 illustre une vue éclatée d'un socle d'un mode de réalisation non limitatif d'une interface pour dispositif optique conforme à l'invention.

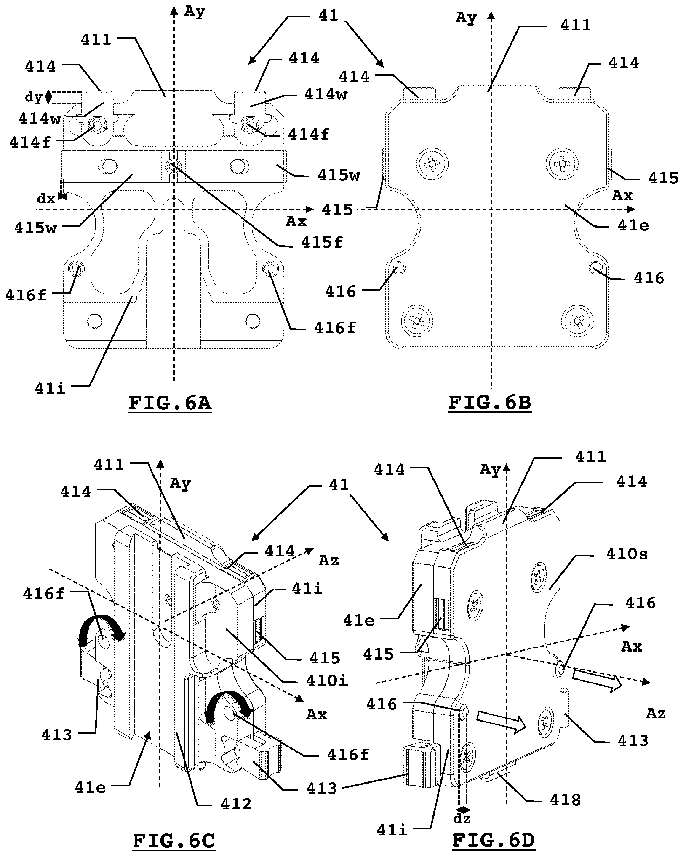

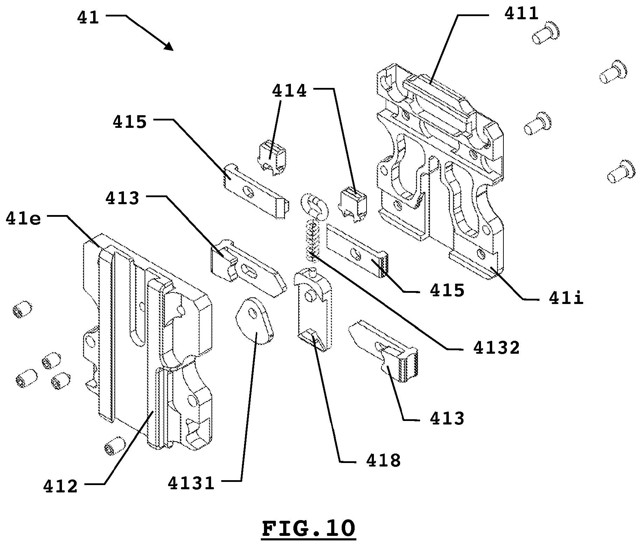

La figure 10 illustre une vue éclatée d'un socle d'un mode de réalisation non limitatif d'une interface pour dispositif optique conforme à l'invention. Les figures 6A à 6D, quant à elles, présentent différentes vues schématiques d'un exemple de réalisation préféré du socle d'une interface pour lier un dispositif optique et un support mobile conforme à l'invention, ledit dispositif optique pouvant, par exemple, consister en des jumelles de vision nocturne et ledit support mobile pouvant par exemple consister en un casque terrestre. L'invention ne saurait toutefois être limitée à ce seul exemple de réalisation. En variante, l'invention pourrait être transposée à tout autre type de dispositif optique, tel qu'à titre d'exemple non limitatif une caméra mobile ou une caméra à imagerie thermique, et/ou tout autre type de support mobile agencé pour enceindre une partie du corps d'un sujet, que ce sujet soit un être humain ou animal.

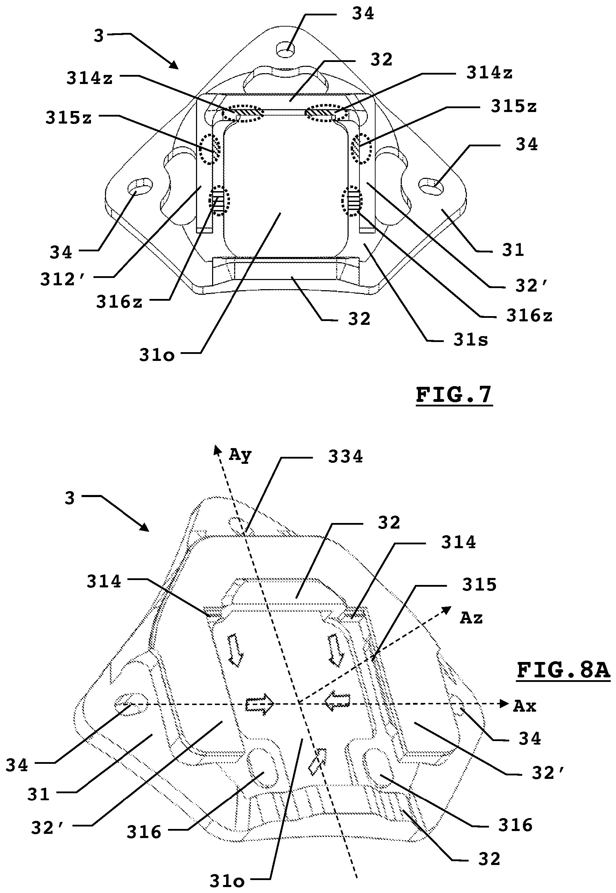

Une interface 4 est adaptée pour être intégrée au sein d'un système, tel que celui décrit en lien avec les figures 1A et 1B, et par voie de conséquence, assurer un assemblage ou une coopération dans une position déterminée de jumelles de vision nocturne 5 avec un casque terrestre 2. Afin de garantir un tel assemblage, à l'instar du système précédemment décrit en lien avec les figures 1A et 1B, ledit casque terrestre 2 peut coopérer solidairement, c'est-à-dire selon une liaison de type encastrement, avec un élément empreinte 3. La figure 7 présente un exemple non limitatif d'un élément empreinte adapté pour coopérer avec une interface 4 conforme à l'invention. Une telle coopération entre un casque terrestre 2 et un élément empreinte 3 peut être réalisée par tous moyens de fixation adaptés pour matérialiser ladite liaison. En variante, un tel élément empreinte 3 peut être directement intégré au sein du casque terrestre 2 et former avec un tel casque une seule et même entité physique. A l'instar des interfaces connues, plus particulièrement de celle décrite en lien avec les figures 3 à 5, une interface 4 conforme à l'invention comporte un socle 41 agencé pour être inséré au sein de l'élément empreinte 3. Au sens de l'invention et dans tout le document, on entend par « socle », tout objet ou toute base sur laquelle reposent les sous-ensembles de l'interface 4. De manière avantageuse, le socle 41 et l'élément empreinte 3, plus particulièrement leur structure et leurs dimensions respectives, sont avantageusement et mutuellement agencés, de sorte que tout ou partie du socle 41 puisse être inséré, c'est-à-dire mis en place, au sein de l'ouverture ou la cavité 31o pratiquée ou décrite par l'élément empreinte 3. Selon un exemple de réalisation préféré non limitatif, décrit notamment en lien avec les figures 6A à 6D, afin de simplifier la fabrication d'une interface 4 conforme à l'invention, le socle 41 de cette dernière peut présenter une forme sensiblement équivalente à un parallélépipède rectangle. De façon correspondante, la cavité 31o pratiquée au sein de l'élément empreinte peut alors présenter une forme similaire, telle que par exemple, une forme sensiblement équivalente à un parallélépipède rectangle, les dimensions de ladite cavité étant alors adaptées pour accueillir de manière ajustée ledit socle 41. Ledit socle 41 peut être constitué de tout matériau ou ensemble de matériaux adaptés pour répondre aux contraintes mécaniques ou chimiques en matière de résistances environnementales, tels que par exemple, un ou plusieurs matériaux plastiques. Également, pour accueillir et enceindre diverses pièces nécessaires lors de l'assemblage micromécanique d'une interface 4 conforme à l'invention, comme par exemple des moyens de fixation, le socle 41 consiste en un corps creux. Selon les figures 6A à 6D, de manière avantageuse, afin de simplifier la fabrication d'une interface 4 conforme à l'invention, le corps creux du socle 41 peut consister en deux parties 41i et 41e scellées ensemble pour former une seule et même entité physique. L'invention ne saurait toutefois être limitée par le nombre de parties composant le socle 41 ou encore le matériau constituant le socle 41 ou plus largement, ladite interface 4.

Comme précisé précédemment, l'un des buts de l'invention est de compenser d'éventuels jeux mécaniques dus aux aléas de fabrications, présents entre le socle 41 de l'interface 4 et l'élément empreinte 3 lorsque ces derniers sont assemblés, quand bien même de manière réversible. Finalement, l'invention permet de décupler l'interopérabilité de l'interface avec un grand nombre d'éléments empreintes de différents constructeurs et revêt ainsi un caractère quasi-universel. Pour ce faire, le socle 41 d'une interface 4 conforme à l'invention comporte et héberge, au sein du corps creux, des moyens compensateurs 414,415,416 de jeux mécaniques. De tels moyens compensateurs de jeux mécaniques sont généralement indépendants des moyens de verrouillage et/ou de verrouillage du socle sur l'élément empreinte. Comme d'ores et déjà mentionné, au sens de l'invention et dans tout le document, on entend par « jeu mécanique », l'espace défini entre un élément empreinte et un socle d'une interface, lorsque ces derniers sont assemblés, dans une direction donnée de l'espace. Un tel jeu mécanique est généralement nécessaire pour la mise en place du socle 41 dans la cavité 31o définie par l'élément empreinte 3. Toutefois, lorsque le ou les jeux mécaniques existants entre le socle 41 et l'élément empreinte 3 deviennent importants, un maintien du socle, et plus généralement de l'interface et le dispositif optique, dans une position stable et déterminée n'est plus garanti, pouvant, dans certains cas, provoquer le décrochage et la perte du dispositif optique, sous la forme par exemple de jumelles de vision nocturne, voire même, dans d'autres cas, une usure prématurée desdits élément empreinte 3 et interface 4.

Pour compenser le ou les jeux mécaniques présents entre une interface 4 conforme à l'invention et d'un élément empreinte 3, les moyens compensateurs 414,415,416 du socle 41 de ladite interface 4 sont montés mobiles de sorte à faire saillie du corps creux et/ou, lorsque l'interface 4 n'est pas employée, de sorte à pouvoir être escamotés ou rétractés au sein du corps creux. Toujours dans le but de rattraper le ou les jeux mécaniques présents entre une interface 4 conforme à l'invention et de l'élément empreinte 3, lesdits moyens compensateurs 414,415,416 sont agencés pour prendre appui, lorsqu'ils sont actionnés ou actifs, contre l'une des parois du corps 31 de l'élément empreinte 3 définissant la cavité 31o, de sorte que lesdits moyens compensateurs 414,415,416 maintiennent le socle 41 dans une position stable déterminée au sein de la cavité 31o pratiquée dans l'élément empreinte 3, corrigeant ainsi tout écart entre les géométries des éléments et donc tous mouvements ou déplacements relatifs desdits éléments. A titre d'exemple non limitatif, tel que décrit en lien avec la figure 7, lesdits moyens compensateurs 414,415,416 du socle 41 d'une interface 4 conforme à l'invention peuvent prendre appui contre une des butées latérales 32', verticales 32 ou encore la surface supérieure 31s du corps 31 de l'élément empreinte 3.

L'invention prévoit que les moyens compensateurs 414,415,416 du socle 41 d'une interface 4 conforme à l'invention puisse compenser le ou les jeux mécaniques présents, simultanément ou indépendamment, selon différentes directions déterminées, plus précisément trois, au regard d'un référentiel ou repère cartésien en trois dimensions (Ax,Ay,Az), tel que décrit notamment en lien avec les figures 2A ou 8A, deux des trois dimensions définissant un plan (Ax,Ay) sensiblement parallèle au plan décrit globalement par la structure essentiellement plane de l'élément empreinte. Conformément à un mode de réalisation non limitatif du socle d'une interface conforme à l'invention décrit en lien avec les figures 6A à 6D, les moyens compensateurs 414,415,416 dudit socle 41 peuvent comprendre des moyens compensateurs verticaux 414, horizontaux 415 et/ou en profondeur 416. Ainsi, de manière avantageuse mais non limitative, les moyens compensateurs 414 du socle 41 de ladite interface 4 peuvent prendre appui contre une paroi de l'élément empreinte 3 selon une première direction déterminée, avantageusement qualifiée de verticale, selon un premier axe vertical Ay. Ainsi, comme décrit en lien avec la figure 7, lesdits moyens compensateurs 414 sont agencés pour prendre appui chacun 314z contre une partie d'une des butées verticales 32 de l'élément empreinte 3 et ainsi prévenir tout déplacement relatif du socle 41 dans la cavité 31o de l'élément empreinte le long du premier axe vertical Ay et maintenir la position de l'interface. Également, en variante ou en complément, les moyens compensateurs 415 du socle 41 peuvent prendre chacun appui contre une paroi de l'élément empreinte 3 selon une deuxième direction déterminée, avantageusement qualifiée de latérale, selon un deuxième axe latéral Ax. Ainsi, comme décrit en lien avec la figure 7, lesdits moyens compensateurs 415 sont agencés pour prendre appui contre une partie d'une des butées latérales 32' de l'élément empreinte 3 et ainsi prévenir tout déplacement relatif du socle 41 dans la cavité 31o de l'élément empreinte le long du deuxième axe latéral Ax et maintenir la position de l'interface. Enfin, en variante ou en complément, les moyens compensateurs 416 du socle 41 peuvent prendre appui contre une paroi de l'élément empreinte 3 selon une troisième direction déterminée, avantageusement qualifiée de profondeur, selon un troisième axe Az. Ainsi, comme décrit en lien avec la figure 7, lesdits moyens compensateurs 416 sont agencés pour prendre appui 316z contre une partie de la surface supérieure 31s du corps 31 de l'élément empreinte 3 et ainsi prévenir tout déplacement relatif du socle 41 dans la cavité 31o de l'élément empreinte le long du troisième axe Az et maintenir la position de l'interface, le tenon 411 du socle 41 étant enserré ou plaqué contre la rainure 32.

Décrivons à présent un exemple structurel de réalisation préféré mais non limitatif des moyens compensateurs 414,415,416 d'une interface 4 pour lier un dispositif optique et un support mobile 2, ladite interface étant conforme à l'invention présenté en lien avec les figures 6A à 6D. Comme précisé précédemment, les moyens compensateurs 414,415,416 dudit socle 41 d'une interface 4 conforme à l'invention peuvent comprendre des moyens compensateurs verticaux 414, horizontaux 415 et/ou en profondeur 416.

Selon les figures 6A à 6D, de tels moyens compensateurs verticaux 414 comportent une ou plusieurs cales 414w, avantageusement deux, hébergées au sein du corps creux, de telles cales 414w étant montées mobiles indépendamment l'une de l'autre au sein du corps creux du socle 41, de sorte que chaque cale 414w, dont la distance de dépassement ou course dy est avantageusement et indépendamment ajustable, puisse faire indépendamment saillie et prendre appui contre une des parties d'une des butées verticales 32 de l'élément empreinte 3. Pour ce faire, les moyens compensateurs verticaux 414 comprennent également des moyens de réglage 414f coopérant avec lesdites cales 414w selon une liaison mécanique adaptée, de sorte que le ou les mouvements ou plus généralement un actionnement desdits moyens de réglage 414f entraînent un ou des mouvements en translation desdites cales 414w. Selon les figures 6A à 6D, de tels moyens de réglage 414f consistent en des vis de réglage, chaque cale 414w étant indépendamment associée à sa propre vis de réglage. Chaque cale 414w et chaque vis de réglage 414f coopèrent par exemple selon une liaison mécanique de type « hélicoïdale », de sorte qu'un mouvement en rotation d'une vis de réglage 414f entraine un mouvement en translation de la cale 414w. La partie filetée de la vis de réglage 414f est d'une longueur suffisante pour pouvoir ajuster la distance de dépassement dy en fonction du jeu mécanique à compenser entre l'interface 4 et l'élément empreinte 3.

De manière analogue, selon les figures 6A à 6D, les moyens compensateurs horizontaux 415 comportent une ou plusieurs cales 415w, avantageusement deux, hébergées au sein du corps creux, de telles cales 415w étant montées mobiles de manière conjointe au sein du corps creux du socle 41, de sorte que lesdites cales 415w, dont la distance de dépassement ou course dx est avantageusement ajustable, puissent faire saillie et prendre appui contre une des parties d'une des butées latérales 32' de l'élément empreinte 3. Pour ce faire, les moyens compensateurs horizontaux 415 comprennent également des moyens de réglage 415f coopérant avec lesdites cales 415w selon une liaison mécanique adaptée, de sorte que le mouvement ou plus généralement l'actionnement desdits moyens de réglage 415f entraînent les mouvements simultanés ou conjoints en translation desdites cales 415w. Selon les figures 6A à 6D, de tels moyens de réglage 415f consistent en une vis de réglage, lesdites cales 415w étant conjointement associée à la même vis de réglage 415f. Lesdites cales 415w et la vis de réglage 415f coopèrent respectivement selon des liaisons mécaniques de type hélicoïdale, de sorte qu'un mouvement en rotation de ladite vis de réglage 415f entraine les mouvements respectifs et conjoints en translation de ladite cale 415w. La partie filetée de la vis de réglage 415f est d'une longueur suffisante pour pouvoir ajuster la distance de dépassement ou course dx en fonction du jeu mécanique à compenser entre l'interface 4 et l'élément empreinte 3.

Selon les figures 6A à 6D, les moyens compensateurs en profondeur 416 comportent une ou plusieurs vis 416, avantageusement deux, hébergées au sein du corps creux, de telles vis 416 étant montées mobiles indépendamment l'une de l'autre au sein du corps creux du socle 41, de sorte que chaque vis 416, dont la distance de dépassement ou course dz est avantageusement et indépendamment ajustable, puisse faire indépendamment saillie et prendre appui contre une partie de la surface supérieure 31s du corps 31 de l'élément empreinte 3. La partie filetée des vis 416 est d'une longueur suffisante pour pouvoir ajuster la distance de dépassement dz en fonction du jeu mécanique à compenser entre l'interface 4 et l'élément empreinte 3.

A l'instar d'une interface conforme à l'invention décrite précédemment, l'invention prévoit un élément empreinte adapté pour lier un support mobile et un dispositif optique, un tel élément empreinte coopérant solidairement avec le socle d'une interface et étant apte à coopérer avec des socles d'interfaces de formes et/ou de dimensions peu rigoureuses. Finalement, l'invention permet de décupler l'interopérabilité de l'élément empreinte avec un grand nombre d'interfaces de différents constructeurs et revêt ainsi un caractère quasi-universel. Les figures 8A à 8D présentent différentes vues schématiques d'un exemple de réalisation préféré d'un élément empreinte de liaison d'un dispositif optique et d'un support mobile conforme à l'invention, ledit dispositif optique pouvant par exemple consister en des jumelles de vision nocturne et ledit support mobile pouvant par exemple consister en un casque terrestre.

Selon la figure 8A, le corps 31, plus particulièrement le cadre d'un élément empreinte 3 conforme à l'invention présente avantageusement des parties creuses. Lesdites parties creuses du corps 31 comportent et hébergent des moyens compensateurs 314,315,316 de jeux mécaniques.

Pour compenser le ou les jeux mécaniques présents entre une interface 4 conforme à l'invention et un élément empreinte 3, les moyens compensateurs 314,315,316 du corps 31 de l'élément empreinte 3 sont montés mobiles de sorte à faire saillie du corps 31, et lorsque l'interface 4 n'est pas employée, de sorte à pouvoir être escamotés ou rétractés au sein du corps 31. Toujours dans le but de rattraper le ou les jeux mécaniques présents entre une interface 4 conforme à l'invention et de l'élément empreinte 3, lesdits moyens compensateurs 314,315,316 sont agencés pour prendre appui, lorsqu'ils sont actionnés ou actifs, contre l'une des parois du socle de l'interface 4, de sorte que lesdits moyens compensateurs 314,315,316 maintiennent le socle 41 dans une position stable déterminée au sein de la cavité 31o pratiquée dans l'élément empreinte 3, corrigeant ainsi tout écart entre les géométries des éléments et donc tous mouvements ou déplacements relatifs desdits éléments.

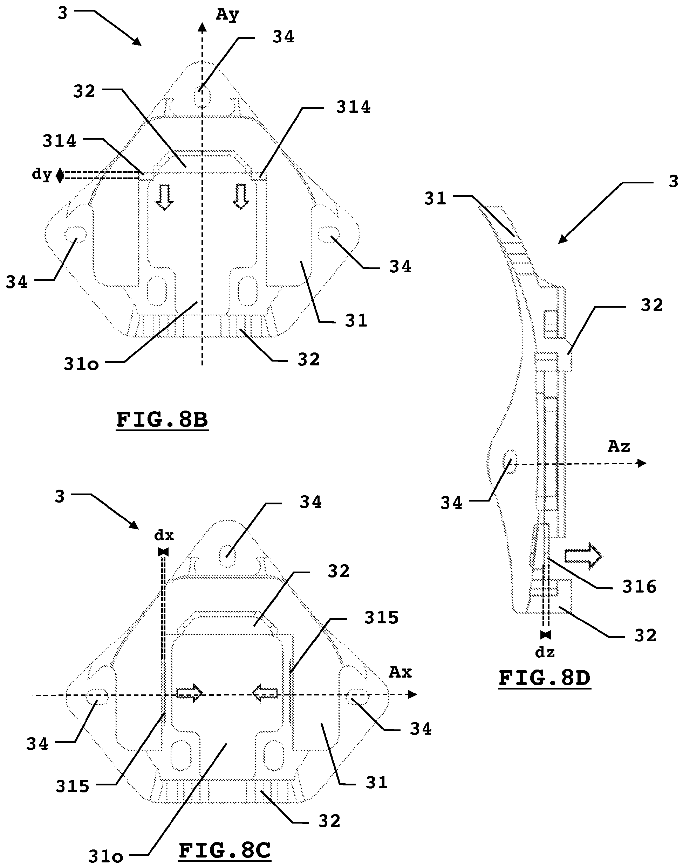

L'invention prévoit que les moyens compensateurs 314,315,16 du corps 31 d'un élément empreinte conforme à l'invention puisse compenser le ou les jeux mécaniques présents, simultanément ou indépendamment, selon différentes directions déterminées, plus précisément trois, au regard d'un référentiel ou repère cartésien en trois dimensions (Ax,Ay,Az), tel que décrit notamment en lien avec les figures 8A deux des trois dimensions définissant un plan (Ax,Ay) sensiblement parallèle au plan décrit globalement par la structure essentiellement planaire de l'interface. Conformément à un mode de réalisation non limitatif d'un élément empreinte conforme à l'invention décrit en lien avec les figures 8A à 8D, les moyens compensateurs 314,315,316 dudit corps 31 peuvent comprendre des moyens compensateurs verticaux 314, horizontaux 315 et/ou en profondeur 316. Ainsi, de manière avantageuse mais non limitative, selon la figure 8B, les moyens compensateurs 314 du corps 31 dudit élément empreinte peuvent prendre appui contre une paroi de l'interface 4 selon une première direction déterminée, avantageusement qualifiée de verticale, selon un premier axe vertical Ay. Également, en variante ou en complément, selon la figure 8C, les moyens compensateurs 315 du corps 31 dudit élément empreinte peuvent prendre chacun appui contre une paroi de l'interface 4 selon une deuxième direction déterminée, avantageusement qualifiée de latérale, selon un deuxième axe latéral Ax. Enfin, en variante ou en complément, selon la figure 8D, les moyens compensateurs 316 du corps 31 dudit élément empreinte 3 peuvent prendre appui contre une paroi de l'interface 4 selon une troisième direction déterminée, avantageusement qualifiée de profondeur, selon un troisième axe Az.

Décrivons à présent un exemple structurel de réalisation préféré mais non limitatif des moyens compensateurs 314,315,316 d'un élément empreinte pour lier un dispositif optique et un support mobile 2, ledit élément empreinte étant conforme à l'invention présenté en lien avec les figures 8A à 8D. Comme précisé précédemment, les moyens compensateurs 314,315,316 du corps 31 d'un élément empreinte 3 conforme à l'invention peuvent comprendre des moyens compensateurs verticaux 314, horizontaux 315 et/ou en profondeur 316.

Selon les figures 8A et 8B, de tels moyens compensateurs verticaux 314 comportent une ou plusieurs cales 314, avantageusement deux, hébergées au sein du corps 31, plus particulièrement au sein d'une des butées verticales 32 avantageusement creuses, de telles cales 314 étant montées mobiles indépendamment l'une de l'autre au sein de ladite butée verticale 32, de sorte que chaque cale 314, dont la distance de dépassement dy ou course est avantageusement et indépendamment ajustable en fonction du jeu mécanique à compenser entre l'interface 4 et l'élément empreinte 3, puisse faire indépendamment saillie et prendre appui contre une des faces du socle 41 de l'interface 4.

De manière analogue, selon les figures 8A et 8C, les moyens compensateurs horizontaux 315 comportent une ou plusieurs cales 315, avantageusement deux, hébergées au sein du corps 31, plus particulièrement et respectivement au sein des butées latérales 32' avantageusement creuses du corps 31, de telles cales 315 étant montées mobiles indépendamment l'une de l'autre au sein au sein des butées latérales 32' du corps 31, de sorte que chaque cale 315, dont la distance de dépassement dx ou course est avantageusement et indépendamment ajustable en fonction du jeu mécanique à compenser entre l'interface 4 et l'élément empreinte 3, puisse faire indépendamment saillie et prendre appui contre une des faces du socle 41 de l'interface 4.

De manière analogue, selon les figures 8A et 8D, les moyens compensateurs en profondeur 316 comportent une ou plusieurs cales 316, avantageusement deux, hébergées au sein du corps 31, plus particulièrement et respectivement au niveau de la cavité 31o pratiquée au sein dudit corps 31, de telles cales 316 étant montées mobiles indépendamment l'une de l'autre au sein dudit corps 31, de sorte que chaque cale 316, dont la distance de dépassement dz ou course est avantageusement et indépendamment ajustable en fonction du jeu mécanique à compenser entre l'interface 4 et l'élément empreinte 3, puisse faire indépendamment saillie et prendre appui contre une des faces du socle 41 de l'interface 4.

Comme d'ores et déjà mentionné, un autre but de l'invention consiste à éviter tout déverrouillage non intentionnel de ladite interface et de réduire les risques de chute ou de perte de cette dernière, voire même du dispositif optique. Pour ce faire, une interface 4 de liaison d'un dispositif optique 5 et d'un support mobile 2, via un élément empreinte 3, peut comporter des moyens de verrouillage et/ou de déverrouillage agencés pour requérir deux actions ou opérations d'un utilisateur du support mobile 2 distinctes et simultanées pour assurer leur actionnement. Bien évidemment, l'emploi de tels moyens de verrouillage et/ou déverrouillage requérant l'emploi de deux opérations conjointes pourrait être éventuellement, en variante, transposé sur tout type d'interface connu. L'utilisation de moyens de verrouillage et/ou de déverrouillage à deux opérations pour déclencher le désengagement de l'interface de l'élément empreinte s'avère particulièrement astucieux, puisqu'un choc latéral ou un appui involontaire ne peut provoquer l'actionnement desdits moyens de verrouillage et/ou de déverrouillage, car un tel choc ou appui involontaire est généralement peu à même de pouvoir reproduire deux actions distinctes et conjointes. De cette manière, un organe de commande mixte peut être constitué, nécessitant deux actions conjointes ou simultanées par un utilisateur d'un système en lien avec lequel une interface 4 de liaison d'un dispositif optique 5 et d'un support mobile 2 conforme à l'invention est employée, pour déclencher le déverrouillage et/ou le verrouillage de l'interface sur l'élément empreinte.

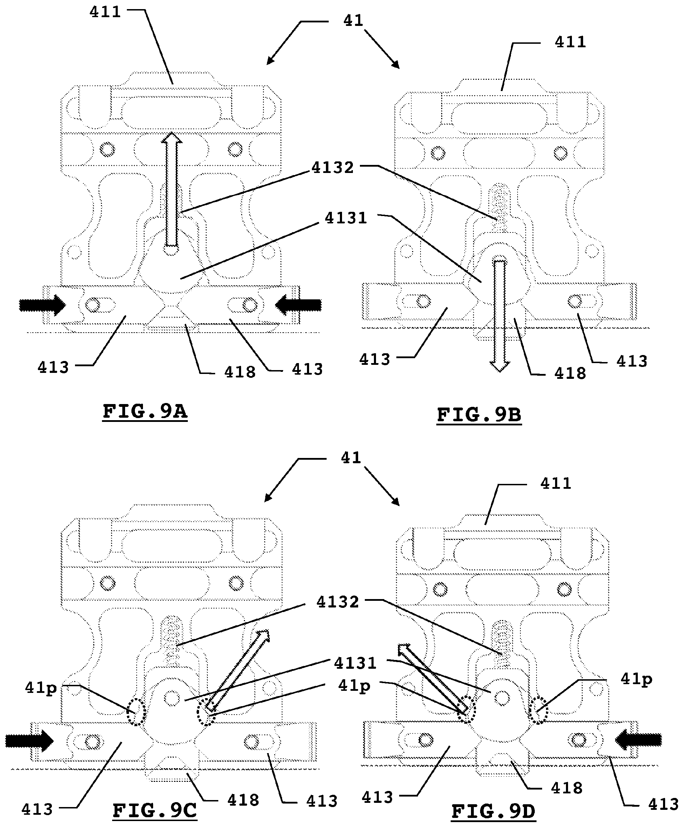

Les figures 9A à 9D présentent différentes vues schématiques d'un exemple de réalisation non limitatif du socle 41 d'une interface 4 de liaison d'un dispositif optique 5 et d'un support mobile 2 conforme à l'invention, mettant en exergue le fonctionnement d'un exemple non limitatif de réalisation de moyens de verrouillage et/ou de déverrouillage 413,418,4131,4132 du socle de ladite interface. De tels moyens de verrouillage et/ou de déverrouillage du socle 41 de ladite interface 4 peuvent comprendre avantageusement mais non limitativement un système d'oscillation à came.

Selon les figures 9A à 9D, à l'instar des interfaces connues, les moyens de verrouillage et/ou de déverrouillage comportent un loquet 418. Ledit loquet 418 est avantageusement agencé, de par sa structure et ses dimensions, pour être inséré, lorsque celui-ci fait saillie, au sein de la rainure 32 pratiquée dans un élément empreinte 3 et ainsi assurer l'engagement du socle 41 de l'interface 4 au sein dudit élément empreinte 3. En outre, lesdits moyens de verrouillage et/ou de déverrouillage comprennent avantageusement deux boutons actionneurs 413 hébergés au sein du corps creux du socle 41, montés mobiles de sorte à faire saillie et agencés pour actionner une came 4131 elle-même montée mobile, ladite came 4131 coopérant avec ledit loquet 418 selon une liaison mécanique de type pivot selon un axe perpendiculaire à l'axe de la course du loquet 418, puisque celle-ci est montée rotative sur ledit loquet, et provoquer finalement l'engagement ou le désengagement du loquet 418 au sein de la rainure basse 33. Pour ce faire, les moyens de verrouillage et/ou de déverrouillage comportent une came 4131 coopérant avec ledit loquet 418. Au sens de l'invention, on entend par « came » toute pièce ou tout organe mécanique permettant de piloter le déplacement du loquet 418. Les moyens de verrouillage et/ou de déverrouillage comprennent ainsi un ressort hélicoïdal 4132, coopérant solidairement avec le loquet 418, agencé pour exercer une force de compression et finalement entraîner un mouvement de translation du loquet, lorsque ledit ressort 4132 est comprimé sous l'action et la transmission de l'effort réalisé par la came 4131. La came 4131 coopère en outre avec les boutons actionneurs 413, l'actionnement du ou desdits boutons consistant en un mouvement en translation transmis ensuite à la came 4131.

La figure 9A présente une vue du socle 41 de l'interface 4 comprenant des moyens de verrouillage et/ou de verrouillage en mode actif, c'est-à-dire lorsque le loquet 418 est désengagé de la rainure basse 33 de l'élément empreinte 3. En effet, l'appui simultané sur les deux boutons actionneurs 413 (situation symbolisée par les deux flèches noires en figure 9A) entraîne un mouvement de translation verticale de la came 4131, transmettant un effort au ressort hélicoïdal 4132 qui se comprime (situation symbolisée par une flèche en trait noir en figure 9A) et permet finalement un mouvement en translation, plus particulièrement la montée, du loquet 418. La montée du loquet 418 entraîne son désengagement de la rainure et finalement le déboîtement du socle de l'interface de l'élément empreinte 3.

La figure 9B illustre schématiquement une vue du socle 41 de l'interface 4 comprenant des moyens de verrouillage et/ou de verrouillage en mode inactif, c'est-à-dire lorsque le loquet 418 est engagé au sein de la rainure basse 33 de l'élément empreinte 3. En effet, l'absence d'appui sur les deux boutons actionneurs 413 n'entraîne aucun mouvement de la came 4131 : le loquet 418 reste ainsi dans une position stable, avantageusement maintenu engagé dans la rainure basse 33.

Les figures 9C et 9D illustrent schématiquement des vues du socle 41 de l'interface 4 comprenant des moyens de verrouillage et/ou de verrouillage comportant deux boutons actionneurs 413, un seul des boutons actionneurs 413 étant sollicité par un utilisateur, respectivement à gauche ou à droite, et par voie de conséquence le loquet 418 étant alors maintenu engagé au sein de la rainure basse 33 de l'élément empreinte 3. Conformément aux figures 9C et 9D, un appui unique sur l'un des deux boutons actionneurs 413 entraine un mouvement de rotation de la came 4131 contre un épaulement 41p du socle 41, bloquant tout déplacement de translation vertical vers le haut de la came et agissant tel un verrou pour la course du loquet 418.

Enfin, l'un des buts de l'invention consiste en l'emploi d'une interface conforme à l'invention précédemment décrite et agencée pour lier un dispositif optique sous la forme de jumelles de vision nocturne et d'un support mobile sous la forme d'un casque pour personnel militaire évoluant au sol dit casque terrestre. Pour ce faire, l'invention concerne en outre un système 1. Tel que décrit précédemment, un tel système 1 comprend un support mobile 2, un élément empreinte 3 coopérant solidairement avec ledit support mobile 2, une interface 4 coopérant de manière solidaire et réversible avec ledit élément empreinte 3, comprenant un dispositif optique 5 coopérant de manière solidaire et réversible avec ladite interface 4. De manière avantageuse mais non limitative, l'interface 4 est conforme à l'invention.

L'invention a été décrite lors de son utilisation en lien avec un support mobile sous la forme d'un casque pour personnel militaire évoluant dans un environnement terrestre, maritime ou aérien dit respectivement « casque de protection terrestre », « casque de protection maritime » ou « casque de protection aéronautique » et plus particulièrement, pour assurer des fonctions de fixation d'un dispositif optique, sous la forme de jumelles de vision nocturne fixée sur un tel casque terrestre, afin qu'un utilisateur d'un tel casque puisse sur le terrain exploiter sur demande ledit dispositif optique. Un tel équipement 5 doit être maintenu avec une grande stabilité pour ne pas déstabiliser l'utilisation. Elle peut également être mise en œuvre pour tout support mobile sous la forme d'un équipement de tête, tel que, non limitativement, un casque militaire, balistique ou non, casque de maintien de l'ordre, casque d'intervention et/ou casque civil, un harnais de tête, un masque facial, ou encore tout autre support mobile agencé pour enceindre une partie du corps d'un sujet, que ce sujet soit un être humain ou animal. En outre, l'invention peut être également mis en œuvre pour tout dispositif optique dont la position relative au support doit être maintenue stable dans le temps. L'invention ne saurait être limitée à l'application au sein de laquelle le système 1 conforme à l'invention est employé.

En outre, un système conforme à l'invention peut comprendre d'autres accessoires, pour notamment, à titre d'exemples non limitatifs, assurer une communication avec le monde extérieur ou protéger l'utilisateur dudit système. De tels accessoires peuvent être à titre d'exemples non limitatifs, choisis parmi un ou plusieurs moyens d'émission et/ou de réception de communication, tels qu'un microphone ou audiophone.

## Revendications

1. Interface (4) de liaison d'un dispositif optique (5) et d'un support mobile (2) coopérant solidairement avec un élément empreinte (3), ladite interface (4) comportant un socle (41) agencé pour être inséré au sein de l'élément empreinte (3,31o), ledit socle (41) consistant en un corps creux, ladite interface (4) étant **caractérisée en ce que** ledit socle (41) comporte des moyens compensateurs (414,415,416) de jeu(x) mécanique(s) hébergés et montés mobiles au sein du corps creux de sorte à faire saillie et agencés pour prendre appui contre une paroi (314z,315z,316z) de l'élément empreinte (3)selon une première et une deuxième directions déterminées (Ax, Ay, Az).

2. Interface (4) selon la revendication 1, pour laquelle les moyens compensateurs (414,415,416) prennent également appui contre une paroi de l'élément empreinte (3) selon une troisième direction déterminée (Ax,Ay,Az).

3. Interface (4) selon l'une quelconque des revendications précédentes, pour laquelle les moyens compensateurs (414,415,416) comprennent des moyens compensateurs verticaux (414), latéraux (415) et/ou en profondeur (416), respectivement actionnés par des moyens de réglage (414f,415f,416f).

4. Interface (4) selon l'une quelconque des revendications précédentes, comportant des moyens de verrouillage et/ou de déverrouillage (413,418,4131,4132) agencés pour requérir deux actions distinctes et simultanées pour assurer leur déclenchement.

5. Interface (4) selon la revendication précédente, pour laquelle les moyens de verrouillage et/ou de déverrouillage comprennent un système d'oscillation à came (4131,4132) et deux boutons actionneurs (413) coopérant avec ledit système d'oscillation à came (4131,4132).

6. Élément empreinte (3) de liaison d'un dispositif optique (5) et d'un support mobile (2) coopérant solidairement avec une interface (4) comprenant un socle (41), ledit élément empreinte (3) comportant un corps (31) comprenant un cadre (31s,32,32') définissant une cavité (31o) agencée pour accueillir le socle (41) de ladite interface (4), ledit élément empreinte (3) étant **caractérisé en ce que** ledit cadre (31s,32,32') comporte des moyens compensateurs (314,315,316) de jeu(x) mécanique(s) hébergés et montés mobiles au sein dudit cadre de sorte à faire saillie et agencés pour prendre appui contre une paroi du socle (41) de l'interface (4) selon une première et une deuxième directions déterminées (Ax, Ay, Az).

7. Élément empreinte (3) selon la revendication 6, pour lequel les moyens compensateurs (314,315,316) prennent appui contre une paroi du socle (41) de l'interface (4) selon une troisième direction déterminée (Ax,Ay,Az).

8. Élément empreinte (3) selon l'une quelconque des revendications 6 à 7, pour lequel les moyens compensateurs (314,315,316) comprennent des moyens compensateurs verticaux (314), latéraux (315) et/ou en profondeur (316).

9. Système (1), comprenant un support mobile (2), un élément empreinte (3) coopérant solidairement avec ledit support mobile (2), une interface (4) coopérant de manière solidaire et réversible avec ledit élément empreinte (3), un dispositif optique (5) coopérant de manière solidaire et réversible avec ladite interface (4), ledit système étant **caractérisé en ce que** l'interface (4) est conforme à l'une quelconque des revendications 1 à 5.

10. Système (1), comprenant un support mobile (2), un élément empreinte (3) coopérant solidairement avec ledit support mobile (2), une interface (4) coopérant de manière solidaire et réversible avec ledit élément empreinte (3), un dispositif optique (5) coopérant de manière solidaire et réversible avec ladite interface (4), ledit système étant **caractérisé en ce que** l'élément empreinte (3) est conforme à l'une quelconque des revendications 6 à 8.

## Patentansprüche

1. Schnittstelle (4) zum Verbinden einer optischen Vorrichtung (5) und eines mobilen Trägers (2), der fest mit einem Halterungsblech (3) zusammenwirkt, wobei die Schnittstelle (4) einen Sockel (41) aufweist, der dazu angeordnet ist, in das Halterungsblech (3, 31o) eingesetzt zu werden, wobei der Sockel (41) aus einem Hohlkörper besteht, wobei die Schnittstelle (4) **dadurch gekennzeichnet ist, dass** der Sockel (41) Ausgleichsmittel (414, 415, 416) für mechanisches Spiel aufweist, die derart beweglich innerhalb des Hohlkörpers untergebracht und montiert sind, dass sie vorstehen und derart angeordnet sind, dass sie entlang einer ersten und einer zweiten bestimmten Richtung (Ax, Ay, Az) an einer Wand (314z, 315z, 316z) des Halterungsblechs (3) anliegen.

2. Schnittstelle (4) nach Anspruch 1, wobei die Ausgleichsmittel (414, 415, 416) auch entlang einer dritten bestimmten Richtung (Ax, Ay, Az) an einer Wand des Halterungsblechs (3) anliegen.

3. Schnittstelle (4) nach einem der vorstehenden Ansprüche, wobei die Ausgleichsmittel (414, 415, 416) vertikale (414), seitliche (415) und/oder Tiefenausgleichsmittel (416) umfassen, die jeweils durch Einstellmittel (414f, 415f, 416f) betätigt werden.

4. Schnittstelle (4) nach einem der vorstehenden Ansprüche, die Verriegelungs- und/oder Entriegelungsmittel (413, 418, 4131, 4132) aufweist, die so angeordnet sind, dass sie zwei separate und gleichzeitige Aktionen erfordern, um ihre Auslösung sicherzustellen.

5. Schnittstelle (4) nach dem vorstehenden Anspruch, wobei die Verriegelungs- und/oder Entriegelungsmittel ein Pendelkurvenscheibensystem (4131, 4132) und zwei Betätigungsknöpfe (413) umfassen, die mit dem Pendelkurvenscheibensystem (4131, 4132) zusammenwirken.

6. Halterungsblech (3) zum Verbinden einer optischen Vorrichtung (5) und eines mobilen Trägers (2), das fest mit einer Schnittstelle (4) zusammenwirkt, die einen Sockel (41) umfasst, wobei das Halterungsblech (3) einen Körper (31) aufweist, der einen Rahmen (31s, 32, 32') umfasst, der einen Hohlraum (31o) definiert, der angeordnet ist, um den Sockel (41) der Schnittstelle (4) aufzunehmen, wobei das Halterungsblech (3) **dadurch gekennzeichnet ist, dass** der Rahmen (31s, 32, 32') Ausgleichsmittel (314, 315, 316) für mechanisches Spiel aufweist, die derart beweglich innerhalb des Rahmens untergebracht und montiert sind, dass sie vorstehen und derart angeordnet sind, dass sie entlang einer ersten und einer zweiten bestimmten Richtung (Ax, Ay, Az) an einer Wand des Sockels (41) der Schnittstelle (4) anliegen.

7. Halterungsblech (3) nach Anspruch 6, wobei die Ausgleichsmittel (314, 315, 316) entlang einer dritten bestimmten Richtung (Ax, Ay, Az) an einer Wand des Sockels (41) der Schnittstelle (4) anliegen.

8. Halterungsblech (3) nach einem der Ansprüche 6 bis 7, wobei die Ausgleichsmittel (314, 315, 316) vertikale (314), seitliche (315) und/oder Tiefenausgleichsmittel (316) umfassen.

9. System (1), umfassend einen mobilen Träger (2), ein Halterungsblech (3), das fest mit dem mobilen Träger (2) zusammenwirkt, eine Schnittstelle (4), die fest und reversibel mit dem Halterungsblech (3) zusammenwirkt, eine optische Vorrichtung (5), die fest und reversibel mit der Schnittstelle (4) zusammenwirkt, wobei das System **dadurch gekennzeichnet ist, dass** die Schnittstelle (4) einem der Ansprüche 1 bis 5 entspricht.

10. System (1), umfassend einen mobilen Träger (2), ein Halterungsblech (3), das fest mit dem mobilen Träger (2) zusammenwirkt, eine Schnittstelle (4), die fest und reversibel mit dem Halterungsblech (3) zusammenwirkt, eine optische Vorrichtung (5), die fest und reversibel mit der Schnittstelle (4) zusammenwirkt, wobei das System **dadurch gekennzeichnet ist, dass** das Halterungsblech (3) einem der Ansprüche 6 bis 8 entspricht.

## Claims

1. Interface (4) for connecting an optical device (5) and a movable support (2) cooperating interdependently with an imprinted element (3), said interface (4) comprising a base (41) arranged to be inserted in the imprinted element (3, 31o), said base (41) consisting of a hollow body, said interface (4) being **characterized in that** said base (41) comprises means (414, 415, 416) for compensating for mechanical play which are housed and movably mounted within the hollow body so as to protrude and are arranged to bear against a wall (314z, 315z, 316z) of the imprinted element (3) in a first and a second predetermined direction (Ax, Ay, Az).

2. Interface (4) according to claim 1, wherein the compensating means (414, 415, 416) also bear against a wall of the imprinted element (3) in a third predetermined direction (Ax, Ay, Az).

3. Interface (4) according to any one of the preceding claims, wherein the compensating means (414, 415, 416) comprise vertical (414), lateral (415) and/or depth (416) compensating means, respectively actuated by adjustment means (414f, 415f, 416f).

4. Interface (4) according to any one of the preceding claims, comprising locking and/or unlocking means (413, 418, 4131, 4132) arranged to require two distinct and simultaneous actions to ensure the activation thereof.

5. Interface (4) according to the preceding claim, wherein the locking and/or unlocking means comprise a cam oscillation system (4131, 4132) and two actuator buttons (413) cooperating with said cam oscillation system (4131, 4132).

6. Imprinted element (3) for connecting an optical device (5) and a movable support (2) cooperating interdependently with an interface (4) comprising a base (41), said imprinted element (3) comprising a body (31) comprising a frame (31s, 32, 32') defining a cavity (31o) arranged to receive the base (41) of said interface (4), said imprinted element (3) being **characterized in that** said frame (31s, 32, 32') comprises means (314, 315, 316) for compensating for mechanical play which are housed and movably mounted within said frame so as to protrude and are arranged to bear against a wall of the base (41) of the interface (4) in a first and a second predetermined direction (Ax, Ay, Az).

7. Imprinted element (3) according to claim 6, wherein the compensating means (314, 315, 316) bear against a wall of the base (41) of the interface (4) in a third predetermined direction (Ax, Ay, Az).

8. Imprinted element (3) according to any one of claims 6 to 7, wherein the compensating means (314, 315, 316) comprise vertical (314), lateral (315) and/or depth (316) compensating means.

9. System (1), comprising a movable support (2), an imprinted element (3) cooperating interdependently with said movable support (2), an interface (4) cooperating interdependently and reversibly with said imprinted element (3), an optical device (5) cooperating interdependently and reversibly with said interface (4), said system being **characterized in that** the interface (4) is in accordance with any one of claims 1 to 5.

10. System (1), comprising a movable support (2), an imprinted element (3) cooperating interdependently with said movable support (2), an interface (4) cooperating interdependently and reversibly with said imprinted element (3), an optical device (5) cooperating interdependently and reversibly with said interface (4), said system being **characterized in that** the imprinted element (3) is in accordance with any one of claims 6 to 8.
